# EUROPEAN PATENT SPECIFICATION

(11) **EP 2 405 689 B1**
(45) Date of publication and mention of the grant of the patent: **31.10.2012**
(21) Application number: 10168346.4
(22) Date of filing: 02.07.2010
(51) Int. Cl.: H04W 24/08

(54) **Method and device for identifying technical root causes of errors in a telecommunications network**
Verfahren und Vorrichtung zur Identifizierung technischer Grundursachen von Fehlern in einem Telekommunikationsnetzwerk
Procédé et dispositif pour identifier les causes profondes techniques des erreurs dans un réseau de télécommunication

(43) Date of publication of application: 11.01.2012
(73) Proprietor: Tektronix International Sales GmbH, 8212 Neuhausen (CH)
(72) Inventor: Kreher, Ralf, 12587, Berlin (DE)
(74) Representative: Hofstetter, Schurack & Partner

(56) References cited:
- EP-A1- 2 139 277
- US-A1- 2006 217 116
- US-A1- 2007 243 864

## Description

The present invention is related to mobile telecommunications networks, and particularly to identifying technical root causes of errors occurring during calls in a telecommunications network. The term root cause refers to a technical deficiency of a component of the mobile telecommunications network that results in a limited functionality of the network with regard to services offered to subscribers.

In a mobile telecommunications network using a radio access technology, a user can receive and transfer data by means of a mobile equipment while moving freely in a geographic zone covered by the radio access subsystem of the mobile telecommunications network. Examples of a radio access technology are GSM (Global System for Mobile communications), UMTS-FDD (Universal Mobile Telecommunication Systems - Frequency Division Duplexing), UMTS-TDSCDMA (UMTS Time Division Synchronous Code Division Multiple Access), LTE (Long Term Evolution), WLAN (Wireless local area network), and WiMAX (Worldwide Interoperability for Microwave Access). Another term for mobile equipment is user equipment. Examples of a mobile equipment are a mobile phone, a laptop computer, and a personal digital assistant (PDA).

The mobile equipment communicates with a stationary radio system, like a BSS (Base Station Sub-System) or an RNS (Radio Network Sub-System). Technical problems, like an inappropriate tilt of an antenna of the stationary radio subsystem, can result, e.g., in a sudden interruption of the exchange of data between the mobile equipment and the base station. In other words, if the mobile equipment is a mobile phone, the phone call is interrupted or an increased number of radio transmission errors deteriorates the quality of service (QoS). If the mobile equipment is a portable computer, a download of, for example, an email can be interrupted or the transmission can take significantly longer. In the case of a wrong tilt of the antenna, this might happen, if the user moves into an area, that is insufficiently covered by the antenna due to the inappropriate tilt.

Any user trying to use a mobile equipment in such an area might experience similar problems. A service provider running the mobile telecommunication network might therefore receive numerous complaints by these users about problems regarding the accessibility of the radio telecommunications network or about interruptions of calls. For a service provider it is then difficult to identify the root cause of these errors. In the above example, such a root cause would be the disadvantageous tilt of the antenna of one of the base stations.

For the identification of root causes of errors in a mobile telecommunications network, service personnel can analyze the data transferred in the mobile telecommunications network during single calls. Such an analysis can be performed by means of a protocol analyzing unit or protocol testing unit. The protocol testing unit monitors the network traffic as it is exchanged between the single network elements of the network and extracts call data belonging to single calls. Examples of a network element are an RNC, a NodeB, a BTS (base transceiver station), and an MSC (mobile switching centre).

The term call refers to any transfer of interrelated data, like the data exchanged during a single voice call, a video call or a transfer of document data like an internet web page or an e-mail. Generally, during each call interrelated packets of data are transferred in the network and at least a part of the packets is exchanged between at least one mobile user equipment and at least one stationary radio system by means of a radio access technology. A call thus is the time interval between the radio connection setup of a mobile device and the end of that radio connection. During a call, the mobile device and other network elements exchange data packets that can contain control messages and user data content like voice data, video data and document data. The sum of these data packets are referred to as call data of the call.

Once the protocol testing unit is coupled to the network, call data belonging to a specific call can be rooted to the testing unit. In the testing unit, a call trace state machine or call tracer can be provided that allows to monitor the flow of the data, especially control data, as they are transferred through the network. If an error occurs, the network element that detects this error generates an error message that is also received by the protocol testing unit.

With regard to the above mentioned example, a timeout might occur at the RNC, when a user moves into the area that is only insufficiently covered by the base station such that the antenna of the base station does not receive the signal of the mobile equipment any more or vice versa.

For a single call, the protocol testing unit can generate a call trace that can comprise both control messages generated by different components of the mobile network and values of quantities concerning the transmission of data like the signal-to-interference-ratio. Such transmission parameter values, i.e. the control messages and the quantity values, together with the error message can be analyzed by the service personnel operating the protocol testing unit. The operator of the protocol testing unit then has to conclude from experience what might be the technical root cause of the error that led to the error message.

The analysis is especially problematic as a network can have several different technical insufficiencies at a given time. One and the same cell of the network might cause problems because of an inadequate tilt of the antenna, while at the same time the number of users in the cell might be too large resulting in a low signal-to-interference-ratio. If several root causes exist, their effects on the network may overlap. In other words, several different root causes may have the same adverse effect on the network functionality. In this case errors resulting in the same error messages can occur. Similarly, one and the same root cause may result in different errors. For example, the inadequate tilt of the antenna may hinder one user to connect to the network. Another user whose mobile device is already connected to the network might experience an interruption of a call when moving into the areas where the coverage is insufficient. In such cases, an elimination of error causes can only be carried out randomly rather than systematically.

The US 2007/0243864 A1 describes a method for analysing a data set to determine the presence or absence of a defined signature element in order to understand an event or to detect a root cause of an event in a wireless network. A data set may be generated for a particular use of the device, such as a call.

In the US 2006/217116 A1 an apparatus and methods for generating performance statistics on a wireless device are described. Based on the performance statistics, it can be determined if a performance problem is related to the device or the network. The performance statistics may comprise access failure statistics, call drop statistics, service degradation statistics and the like. These statistics represent the number of call drops, the number of service degradations, the number of access failures and the like.

The object of the present invention is to identify at least one technical root cause of errors in a mobile telecommunication network.

One solution to this problem is provided by the method according to claim 1. A further solution is provided by the device according to claim 10. Further advantageous embodiments of the present invention are given by the dependent claims.

The inventive method is for operating a device for identifying at least one technical root cause of such errors that occur during a plurality of calls in a mobile telecommunications network. An example of such a device is a protocol testing unit. The device can also be a computer station that receives output from a protocol testing unit and/or directly from network elements.

The method according to the invention is suitable for use in a network that comprises at least one network element that generates an error message upon the occurrence of an error during a call, where the content of the error message comprises at least an indication of the type of the error, and where the indicated type is one out of a plurality of predefined error types. One example of such a mobile telecommunications network is a network using UMTS as a radio access technology. In such a network, network elements like an RNC (Radio Network Controller), a NodeB, and even the user equipment (UE) can be a source of an error message.

The content of an error message can be, for example, "radio connection with UE lost". This error message can be generated by an RNC. The type of error indicated by this message is a loss of connection between the RNC and a UE. With regard to the introductory example, such an error might occur when the user enters the area that is insufficiently covered by an antenna of a NodeB that is connected to the RNC.

According to the inventive method, the device receives error messages and transmission parameter values. The error messages are of the type generated by the at least one network element. They result from the plurality of calls that form the basis for the identification of the at least one root cause. The transmission parameter values are those extracted from call data of the plurality of calls and/or from network planning data. The extraction is performed by the at least one analysis unit. A well known analysis unit that can perform such an extraction of transmission parameter values is a call trace state machine like it is describes above. Another source of transmission parameter values can be a network planning unit that delivers network planning data. Such network planning data describe the structure of the network. An example of a transmission parameter value like it can be extracted by a call tracer is the RSCP (Received Signal Code Power). A transmission parameter value from a network planning unit can be the type of the cell that the UE was in when the connection was lost. In this case, the according parameter value can be "indoor cell" or "outdoor cell". Further examples for transmission parameters are given by the specifications of the 3 GPP (third generation partnership project) or ETSI (European Telecommunications Standards Institute).

The inventive method further comprises the step of storing, in the device, a list of technical root causes. This list comprises at least one item representing one technical root cause. The list can comprise list items representing technical problems regarding, for example: Coverage, Interference, Cell Overload, Core Network Problem, Handset Problem, Insufficient NodeB Resources, Roaming Problem.

In another step at least one group of rules is stored in the device. Each group of rules comprises at least one rule for evaluating an error message. The error message to be evaluated is of course one that is generated by the at least one network element of the mobile telecommunications network. Each rule allows to decide whether one specific root cause is present in the network. The decision is based on both the evaluated error message and at least one further parameter value or at least one further error message. To this end, each rule comprises one condition for the error type indicated by the evaluated error message and, additionally, at least one further condition is given regarding at least one of the received transmission parameter values. It is also possible, to provide a rule that contains at least one further condition regarding a further received error message. Each group is assigned to one respective list item of the list of technical root causes. Each group of rules thus represents rules that are all suitable for identifying one specific root cause in the network.

As an example for a rule: If the above error message concerning the loss of connection with the UE ("connection to UE lost") is received and the RSCP (as derived by the analysis unit) is below -100 dBm and the type of cell is "outdoor cell", this clearly indicates that the coverage of the cell is insufficient. The according rule would therefore comprise the three conditions just mentioned. This rule would be part of a group of rules that is assigned to the list item of the list of root causes that represents the root cause "Insufficient Coverage".

According to the inventive method, a counter is provided for each group of rules. For at least one received error message, it is verified for at least one rule, whether the conditions given by that rule are fulfilled. If the conditions are fulfilled, the counter for the group of rules that the rule belongs to is incremented. After the received error messages resulting from the plurality of calls have been evaluated, the counter reading for each counter is determined.

Each counter reading indicates, how often each of the root causes represented in the list of root causes has been identified in the mobile telecommunications network. An operator of the device is thus provided with a statistical evaluation of the errors that occurred during the plurality of calls. If a large number of calls is used, e.g. 100 or 5000 calls, the user of the device has a reliable indication of which technical problem causes the largest part of the errors. Owing to the possibility of using a sufficiently large number of statistically relevant data, i.e. the plurality of calls, a weighting of errors can be carried out. Therefore, the method according to the invention allows to detect and eliminate the root cause of errors that adversely affects the functionality of the network most.

The inventive method may further comprise the step of storing, in the device, a list of error categories. This list comprises at least one list item that represents one error category. In this case, each group of rules is assigned both to one technical root cause represented in the list of root causes and to one error category represented in the list of error categories. In other words, the rules that are used to identify one specific root cause are split up in several sub-groups. Each of these sub-groups is assigned to a different error category.

Examples for such error categories are the accessibility of the network (connection cannot be established and redialling is required), the mobility and quality (call is continued as normal despite a problem, e.g. audible noise in a voice call) or the retainability (interruption of an existing connection). It is especially advantageous, if each error category describes a different effect that a technical problem, i.e. a root cause of errors, can have on the network functionality from a subscriber's point of view. This allows to choose the most effective technical measures for improving the network performance from the subscriber's point of view.

The method may further comprise the step of receiving input data from an operator of the device. The input data can then be used for defining at least one item for the list of technical root causes and/or at least one rule for evaluating an error message and/or at least one item for the list of error categories. By providing the means of receiving input data, a user may define both new items in either of the two lists and new rules. This allows a user to contribute new rules that, from his/her experience allow the identification of a certain root cause in the network. Thus, several users may provide their experience to improve the functionality of the device. The service personnel using the device then profits from their experience stored in the form of the list item and the rules.

The method may further comprise the step of providing means for weighting the counter reading of at least one group in dependency of the error category that the at least one group is assigned to. By weighting the counter reading, emphasis can be put on an error category that is known to have a high impact on, e.g., the subscriber satisfaction. By emphasizing the counter reading of root causes that result in errors belonging to a critical error category, a user evaluating the counter readings can immediately see which root cause should be eliminated first in order to maximize user satisfaction. The weighting of a counter reading can be achieved by multiplying the counter reading by a pre-determined factor.

The method may also comprise the step of providing call selection means in the device. The call selection means allow to select calls in the network according to at least one predetermined criterion. Together with the means for selecting, means for receiving only error messages resulting from the selected calls may be provided. As a result, only those calls selected by the call selection means are processed as the plurality of calls. In other words, only the selected calls provide the basis for identifying root causes. The call selection means and the means for receiving only error messages belonging to the selected calls allow to analyze specific sections of the network. As an example, it is possible to select only those calls belonging to mobile devices within one specific cell. Another possibility it the selection of calls concerning a specific group of users/subscribers.

The selection can be performed automatically by the device, for example by determining the criterion for the selection in dependency on key performance indices (KPI) of different sections of the network. As an alternative, means for receiving user input data for predetermining the at least one criterion for the selection can be provided. Thus, a user has influence on which calls are selected.

The method according to the invention may further comprise the step of storing at least one message in the device, wherein the message contains an advice, comprising instructions of how to eliminate a specific technical root cause. The message is preferably stored in a human-readable form. Further, means for selecting and displaying one out of the at least one message can be provided. The selection is dependent on the counter reading for at least one group of rules and on at least one received parameter value and/or at least one received error message.

By storing advises for eliminating a specific root cause and displaying one of the advices allows to give instructions to a user who has identified technical root causes of errors that are present in a network. The displayed message preferably contains an advice regarding this technical root cause that should be eliminated first in order to retain the greatest part of the network functionality.

Another aspect of the invention is a device for identifying at least one technical root cause of errors in a mobile telecommunication network. The device comprises first means for receiving transmission parameter values from at least one analysis unit that extracts the transmission parameter values from call data and/or from network planning data. The device also comprises second means for receiving error messages from at least one network element and/or from at least one analysis unit, where each error message indicates one out of a plurality of pre-defined error types.

A first list storage is provided for storing at least one list item in a list of root causes. Each list item represents one technical root cause. A rules storage is provided for storing at least one group of rules, where each group is assigned to one respective list item of the list of technical root causes and where each group of rules comprises at least one rule for evaluating an error message generated by the at least one network element. The at least one rule corresponds to a rule as it is already described in connection with the inventive method. A counter is provided for each group of rules. The fist list storage and the rules storage are designed to store the at least one list item and the at least one group, respectively. In other words, in the respective storage, corresponding data structures are provided such that the list of root causes and the groups of rules can be created by simply adding single list item and single rules, respectively.

The device is operable to receive error messages as well as transmission parameter values and to verify for at least one received error message and for at least one rule, whether the conditions given by that rule are fulfilled. If this is the case, the counter for the group of rules that the rule belongs to is incremented. The device further determines the counter reading of each counter for the plurality of calls that is analyzed for identifying the at least one technical root cause.

The device according to the invention offers the possibility to process a plurality of calls in a mobile telecommunications network for identifying at least one technical root cause of those errors that occur during the plurality of calls. The root causes can therefore be identified on a statistical basis. The impact each of the root causes has on the functionality of the network is indicated by the respective counter reading.

The device may further have a second list storage for storing at least one list item in a list of error categories, where each list item represents one error category. Each group of rules is then additionally assigned to one respective item of the list of error categories, such that each group of rules is assigned both to one list item in the list of technical root causes and to one list item in the list of error categories. The second list storage provides the possibility to separately count errors belonging to different error categories. If the number of errors belonging to a critical error category is comparatively large, the root cause of these errors can thus be identified as the one having a high priority regarding its elimination. The second list storage is designed in a comparable manner as the first list storage.

Means for calculating a weighted counter reading from a counter reading of at least one counter may also be provided, wherein the weighted counter reading is a function of the error category that the at least one group is assigned to that the counter is provided for. By weighting the counter reading, the counter reading of a critical error category can be, for example, increased in order to signal to a user of the device that the elimination of a specific root cause is especially urgent.

The device may further comprise editing means for enabling a user to edit the list of root causes and/or to add a rule for evaluating an error message to rules storage and/or to edit the list of error categories. Thus, different users may contribute rules that they found especially practical for identifying a certain root cause.

The inventive device may also comprise means for selecting calls from the network according to at least one predetermined criterion. In this case, the second means for receiving are designed to exclusively receive error messages resulting from the selected calls, such that the selected calls are processed as the plurality of calls. This advantageously allows to analyze specific sections of the network. The selection of calls can be performed automatically, for example in dependency on previously received error messages. Another possibility to automatically define the criteria for the selection is by identifying, for example, a cell in which problems are frequent by means of a KPI (Key Performance Index). The means for selecting act as a filter which selects individual calls or calls featuring defined characteristics (e.g. all calls made with an iPhone).

However, it is also possible to define a criterion for the means for selecting manually. To this end, the device may comprise means for receiving user input data for predetermining the at least one criterion for the selection of calls. This allows a user to chose which calls are analyzed for identifying the root causes of errors.

The device according to the invention may be provided as a computer station in a network management system of a mobile telecommunications network. Another embodiment of the device according to the invention is a protocol testing unit that comprises the above-described additional technical features. In this case, the call trace state machine of the protocol testing unit may be used as one of the at least one analysis unit. The device according to the invention can be provided as a portable device.

Further embodiments of the present invention will now be described, by way of example, with reference to the accompanying drawings in which:
Fig. 1 is a schematic illustration of a mobile telecommunications network and a measurement equipment;
Fig. 2 is a schematic illustration of components of the protocol testing unit of fig. 1;
Fig. 3 is a flow chart representing a process for analyzing call data according to the present invention;
Fig. 4 is an illustration of a graphical display of the protocol testing unit showing a rule management dialog;
Fig. 5 is an illustration of the graphical display showing a dialog for adding a new rule;
Fig. 6 is an illustration of the graphical display showing a rule editing dialog;
Fig. 7 is an illustration of the graphical display showing counter readings after an analysis of a selection of calls;
Fig. 8 is an illustration of the graphical display showing counter readings for a different selection of calls;
Fig. 9 is a schematic illustration of the process of applying weighting factors to the counter readings.

For the purpose of illustration, this invention will be described with reference to a mobile telecommunications network using UMTS (Universal Mobile Telecommunications System) as a radio access technology. The invention is applicable to other technologies like GMS, WLAN or WiMAX and LTE.

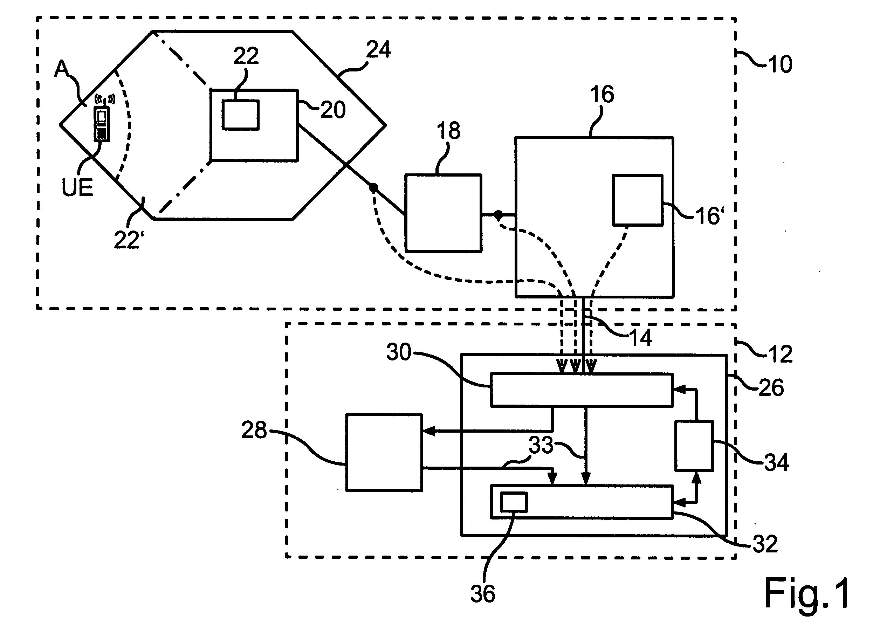

As shown in Fig. 1, a mobile telecommunications network or network 10 is coupled to a measurement equipment 12 by a link 14. By means of the measurement equipment 12, technical root causes of errors in the network 10 can be identified. The measurement equipment 12 also provides advice to the operator of the measurement equipment 12 with regard to technical measures for eliminating an identified root cause.

The network 10 has the typical structure of a UMTS comprising a core network 16, a radio network controller or RNC 18 and a NodeB 20 with an antenna 22. The antenna 22 and other antennas (not shown) of the NodeB 20 provide mobile access to the network 10 within a radio network subsystem or RNS 24. The antenna 22 covers a cell 22' within the RNS 24. For the sake of simplicity, other RNCs of the network 10 are not shown in Fig. 1.

In the area of the RNS 24, a person (not shown) is operating a user equipment UE. The UE can be, for example, a mobile phone or a PDA. Other mobile devices that are also operated in the RNS 24, and especially in cell 22', are not shown in Fig. 1. Between the UE and the other mobile devices on one side and the NodeB 20 on the other, call data are exchanged. The call data are routed through the RNC 18 to receiving devices of the respective calls.

The measurement equipment 12 comprises an evaluation unit 26 and a call trace state machine or call tracer 28. The call tracer 28 is an analysis unit that filters and sequences frames belonging to the same call and that extracts or derives transmission parameter values from call data. In the example illustrated in Fig. 1, the measurement equipment 12 is a protocol testing unit.

Via the link 14 the measurement equipment 12 can receive call data that are exchanged between various elements/components of the network 10, like the NodeB 20 and the RNC 18. In Fig. 1, the link 14 can consist of, for example, IP-connections (IP - internet protocol) or ATM-connections (ATM - asynchronous transfer mode) that allow to route the data from the network 10 to the measurement equipment 12. The routed data can comprise messages (especially error messages) generated by the network components and call data.

The evaluation unit 26 comprises a call selection filter 30, a control element 34, and an evaluation section 32.

The filter 30 is coupled to the call tracer 28 and the evaluation section 32. The call tracer 28 is coupled to the evaluation section 32. The data received by the measurement equipment 12 are filtered by the filter 30. From the filter 30, faltered data are transferred to the call tracer 28 and the evaluation section 32. Output of the call tracer 28 is received by the evaluation section 32. In Fig. 1, the means for receiving the error messages and transmission parameter values that are provided in the evaluation section are symbolized by arrows 33.

The control element 34 can be a monitor and a keyboard of the measurement equipment 12. Generally, the control element 34 can be any man-machine-interface.

In another embodiment of the invention, the measurement equipment is a portable device for use during field work. In yet another embodiment of the invention, a computer application in a desktop computer of, for example, a network management station is provided that comprises an evaluation section similar to the evaluation section 32 and a control element similar to the control element 34. In this embodiment, the evaluation section can receive error messages and transmission parameter values from an analysis unit or a network element in two different ways. The evaluation section may be coupled to the analysis unit or network element by means of a data link similar to the link 14. The evaluation unit may also receive the data by means of at least one storage medium that contains error messages and/or transmission parameter values that have been written to the at least one medium by the analysis unit or the network element.

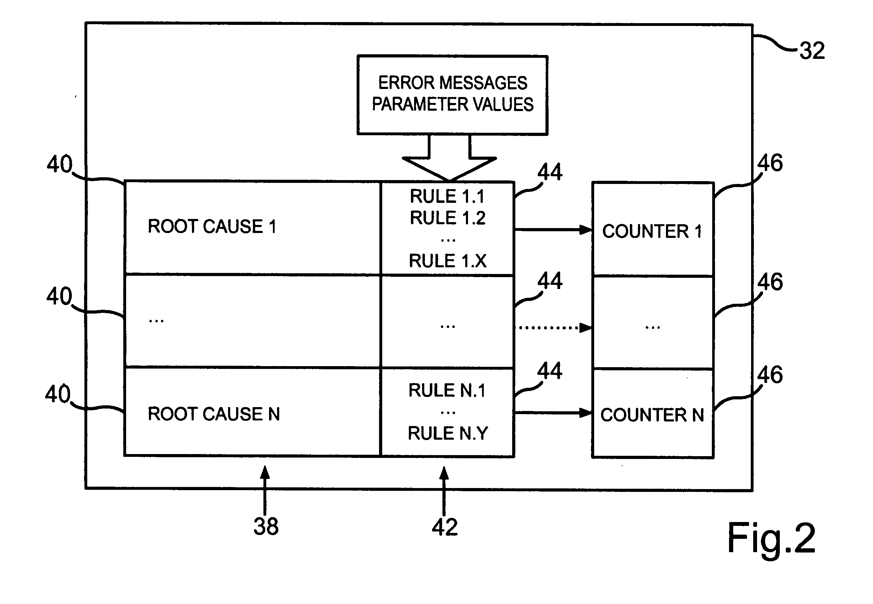

Returning to the example illustrated in fig. 1, in the following, the functionality of the evaluation section 32 is described in connection with figs. 1, 2, and 3. The evaluation section 32 comprises a memory 36. In the memory 36, list storage containing a list 38 of items 40 is provided where each item 40 represents a possible technical root cause of errors as they might occur in the network 10. The list 38 has been created by several experts who have analysed a large number of such errors. Together with the list 38 of technical root causes, rules 42 are stored in a rules storage section of the memory 36. The total number of the rules is N in the example illustrated in Figs. 1 and 2. By means of each of the rules 42 it can be verified, if a specific root cause of errors, i.e. a specific technical problem, is present in the network 10. Each of the rules 42 comprises a condition for an error message (as it might be generated by a component of the network 10) and at least one further condition for a parameter value (as it might be received from the call tracer 28 or from a component of the network 10). The rules 42 have been drafted by the experts. Whenever an expert found out that a certain error message in combination with certain parameter values is typical for a certain technical problem, he added the corresponding rule to the memory 36. The content of the memory 36 has been edited by the experts by means of the control element 36.

In the memory 36, a list storage for storing a list of items representing different error categories is provided. Also, several text messages are also stored in the memory 36. The text messages contain advices on technical measures to eliminate certain root causes.

The rules 42 are grouped together into groups 44. Each of the groups 44 is linked to one item 40 of the list 38 and to a counter 46 of the evaluation section 32. For linking the rules 42 together into the groups 44, the information which group 44 a rule 42 belongs to is stored in the rules storage. For each group, the information which counter 46 belongs to the group 44 is also stored in the rules storage.

In Fig. 1, the rules for identifying a root cause "Root cause 1" are represented by respective labels "Rule 1.1", "Rule 1.2", ..., "Rule 1.X", where X is the total number of rules in the group of rules assigned to the item representing "Root cause 1". The corresponding counter for the group of rules is labelled "Counter 1". In Fig. 1, similar conventions apply to the root cause labelled "Root cause N", where the total number of rules for identifying "Root cause N" is Y. The symbol "..." in Fig. 1 symbolizes elements of the evaluation section 32 that are not shown in detail.

With regard to the underlying example, it may be assumed that the UE is located in an area A of the cell 22' where the radio signal of the antenna 22 is received by the UE at a RSCP (received signal code power) of RSCP = -120 dBm. In the case of cell 22', this is too low for reliably keeping up a radio connection. It may be further assumed that the reason for the insufficient coverage of the area A is that the antenna 22 was installed in a wrong angle of tilt at the NodeB 20. Further, it may be assumed that the subscriber operating the UE is trying to establish a call, but does not get a connection as the radio link setup fails after the UE exchanges several messages with the RNC 18. Finally, it is assumed that several other subscribers are located inside the cell 22', of which those in Area A experience the same problem with their respective mobile device as the subscriber operating the UE.

An operator of the measurement equipment 12 is analysing all calls that are going out from or are directed to cell 22'. For this, the measurement equipment 12 is coupled to the network connection between the NodeB 20 and the RNC 18 on one side and the RNC 18 and the core network 16 on the other. Via the link 14, call data transmitted through the network connections are routed to the measurement equipment 12. When a radio link setup of any of the subscribers in cell 22' fails, the RNC 18 additionally transmits an error message "radio connection with UE lost" that is also transferred to the measurement equipment 12. In fig. 1, a dotted line illustrates how the call data and the error messages that are transmitted to the measurement equipment 12.

The measurement equipment 12 is also connected to a network planning unit 16' that is part of the core network 16. The network planning unit 16' transmits network planning data that are parameter values describing the state of the network 10. In Fig.1, the transmission of these data is indicated by a dotted line. As an example, the network planning data can comprise the information that the cell 22' is an outdoor cell. The network planning data may also be stored on a storage medium that is read by a corresponding reading device of the measurement equipment 12.

The operator has configured the filter 30 to let pass only those call data that belong to cell 22'. As a criterion for the filtering, the operator has entered the identity of cell 22' into the filter 30 by means of the control element 34.

The filter 30 passes the call data from cell 22' and the error messages from RNC 18 to the call tracer 28. The transmission parameter values received from the network planning unit 16' are passed to the evaluation section 32. The call tracer 28 extracts additional transmission parameter values, like the RSCP, and passes them to the evaluation section 32 together with the error messages. In another embodiment of the invention, the filter is part of the call tracer.

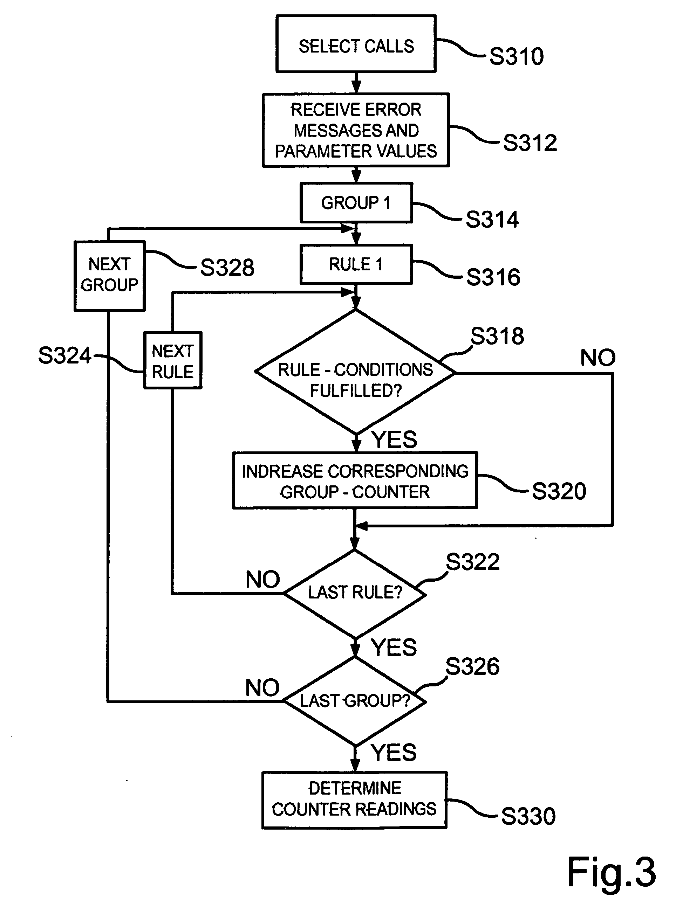

In Fig. 3 it is illustrated how the error messages and the parameter values are processed. As already described, filter 30 selects all calls from cell 22' (S310). The selected calls form a plurality of calls for identifying root causes of error in cell 22'. The evaluation section 32 receives the according error messages and parameter values (S312) either from the call tracer 28 or from the filter 30 (see description above). In the evaluation section 32, the first rule, e.g. the rule "Rule 1.1", of the first group 44 of rules is selected from the memory 36 (S314 and S316). For each received error message, calculating means (not shown) of the evaluation section 32 verify, if all the conditions given by that rule are fulfilled (S318). If this is the case, the counter 46 assigned to the first group 44, i.e. counter 1 ", is incremented (S320). Otherwise, the counter 46 is not changed. If there remain any rules 42 in the first group 44, which is checked in a step S322, a next rule is selected (S324) and verified in the same way as just described (S318 and S320).

After all rules of the first group have been applied, it is checked, if any groups 44 remain in the memory 36 (S326). If this is the case, the next group 44 is selected (S328) and the rules contained in that group are used to analyse the error messages and parameter values (S316 to S322). After all rules 42 of all groups 44 have been verified, the overall counter readings for each counter 46 are read out and displayed on a monitor of the control element 34 (S330).

From the displayed counter readings, the operator of the measurement equipment 12 can directly see how often each root cause has been identified in the cell 22'.

It is not necessary to verify each rule for each error message. For example, another embodiment of the invention evaluates each error message only until the conditions of one rule are fulfilled. After incrementing the corresponding counter, the evaluation of that error messages is interrupted, regardless of any remaining rules. The evaluation is continued with the next error message.

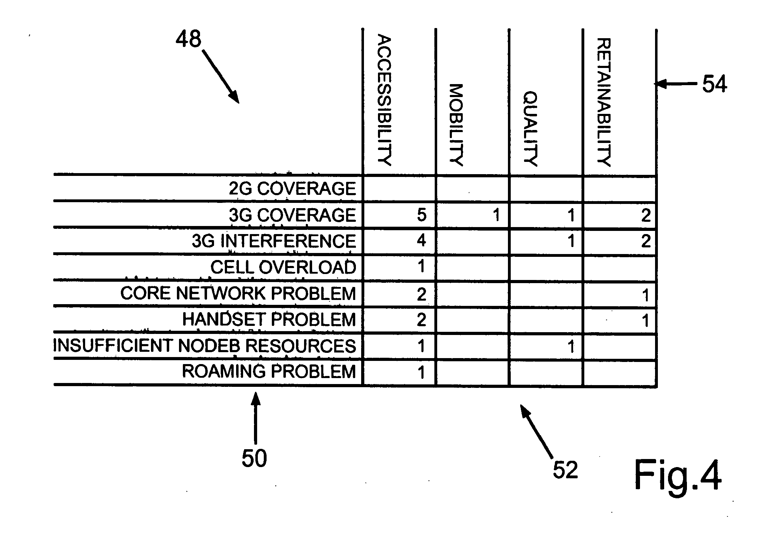

In the following, another embodiment of the present invention is described in connection with Figures 4 to 9. This second embodiment comprises a measurement equipment that has the same layout as the measurement equipment 12. Therefore, in the following description, reference is made to elements of Fig. 1 for explaining the functionality of the second embodiment.

In figures 4 to 9, the display of a monitor of a control element 34 is shown. The control element 34 provides a rule management to a user. In the example of figures 4 to 9, a rule management dialog 48 is shown. An operator is editing a list 50 of root causes and rules for evaluating error messages. The rules are grouped together in groups 52 in a memory 36 of a evaluation section 32 of the measurement equipment according to the second embodiment. In the memory 36, means for storing a list 54 of error categories are provided. In the evaluation section 32, means are provided to assign groups 52 of rules to single items of the list 54 of error categories. As a result, each group 52 is assigned to one item of the list 50 of root causes and one item of the list 54 of error categories in a matrix-like manner. The list of error categories can be edited by the control element 34. In the example, a distinguishing feature of the error categories (Accessibility, Mobility, Quality, Retainability) is the impact that errors from different error categories have on the subscriber experience.

In the rule management dialog 48, it is possible to configure the result matrix that shows root causes of problems in matrix lines and impact on subscriber experience in columns. With matrix row/column operations it is possible to add/remove lines and columns, especially when root causes and appropriate rules have been identified by analysis experts.

In the rule management dialog 48, each matrix field represents a single group of rules. The numbers shown in the matrix fields indicate the number of rules programmed for a particular combination of root cause / subscriber impact (problem/error category).

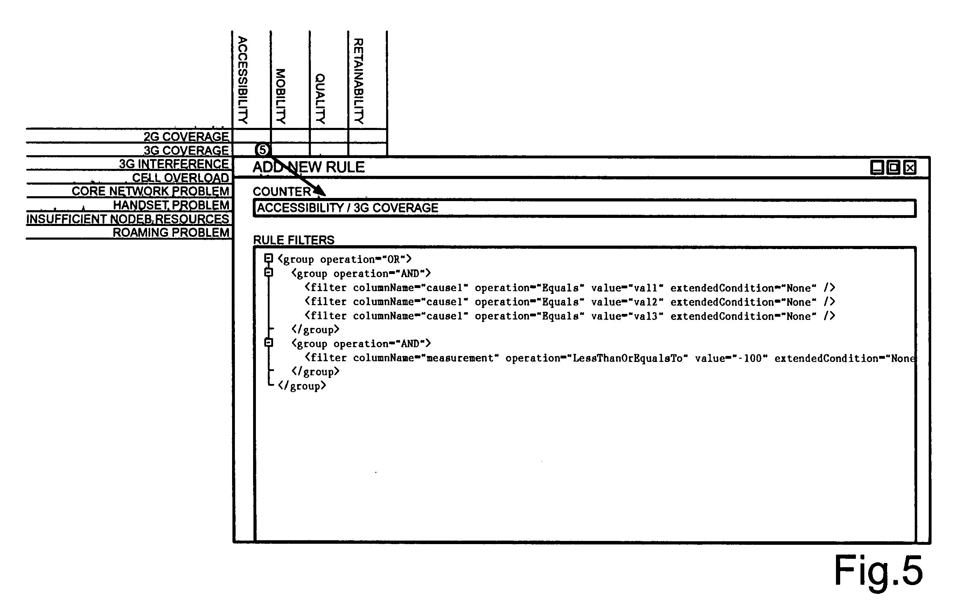

How a rule is programmed is shown by means of a typical example in Fig. 5. In this example a new rule is programmed to detect automatically accessibility problems that are caused by coverage issues in the 3G (third generation) UMTS radio network.

First a rule template is loaded that shows the general structure that applies to each expert rule. In Fig. 5 it can be seen that different filter conditions for call detail records, i.e. parameter values, can be defined. These filter conditions can be linked by Boolean operations (logical AND, logical OR). Each call that fulfils all specified filter conditions is counted as a single event in the matrix combination field Accessilbility/3G Coverage.

The "column name" conditions for each filter criterion can be the columns in "call detail records" (CDRs). In the examples illustrated in Figs. 4 to 9, these CDR columns are filled by the call trace state machine 28 and by the filter 30. The CDRs are received by the evaluation section 32. One example of a call trace state machine that is designed to output such CDRs is the call trace state machine offered by the company Tektronix. The call trace state machine is a proprietary Tektronix design. The CDR format is also proprietary and therefore known to the skilled person.

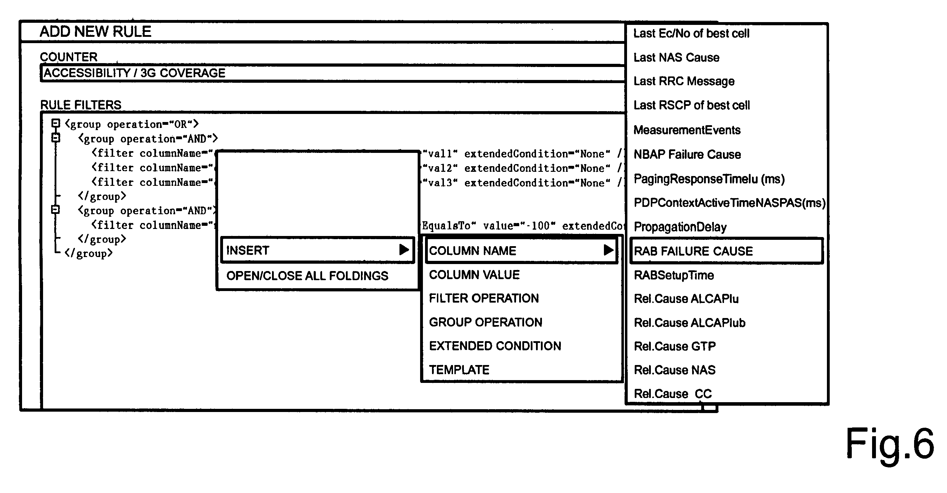

In the example configuration shown in Fig. 6, it shall be checked, if the analyzed calls have a RAB Failure Cause (RAB - radio access bearer). This means: a traffic channel for voice or packet traffic was attempted to be establish in the network 10, but the establishment failed.

The fact that the RAB Establishment failed is detected by the call trace state machine 28. The protocol cause signalled in the network 10 written to the CDR. Now the complete filter rule can be configured by the expert user as follows:
<filter columnName="RABAssignmentRANAPCause" operation="Equals" value="Radio Connection With UE Lost" />

This filter will ensure that all calls are counted where RAB Establishment failed and the network signaled "Radio connection with UE lost" as the protocol cause. "RABAssignmentRANAPCause" in this filter example is the tool-internal name of the CDR database entry that is used to store the RAB Failure Cause.

Now it is clear from the RANAP protocol cause that the RAB Establishment failed, because the connection with the user equipment (UE) was lost. This is visible even for non-expert users. However, there is no indication (root cause analysis) WHY the radio connection with the UE was lost. And without knowing WHY (= root cause) the problem cannot be eliminated.

To identify the root cause, the knowledge of expert users that already investigated a large number of "radio connection with UE lost" cases is required and will be added to the rule by introducing another filter condition:
<filter columnName="RSCP" operation="LessThanOrEquaIsTo" value="-100" extendedCondition="IsOutdoorCell" />

Here RSCP (Received Signal Code Power, a radio quality measurement sent by the UE to the network) is tracked by the call trace state machine 28 and provided in CDRs to the evaluation section 32.

From experience in investigating network failures with RANAP Cause "radio connection with UE lost", the expert user knows that a RSCP values of less than -100 dBm indicates that the UE was in an area with insufficient network coverage, if the visited cell, e.g. cell 22', of the network 10 was an outdoor cell, which means: the visited cells covers a street or field area, but is not located inside a building. This additional condition is important, because for cells in buildings, RSCP values as less as -110 dBm are seen as good coverage due to different radio propagation conditions in closed rooms/buildings.

The information that the visited cell is an outdoor cell is provided in the form of radio network planning data by the network planning unit 16'. The planning data is imported by the measurement equipment 12 in the above described manner. The network planning data can also be imported from a storage medium, like a CD-ROM (compact disk - read only memory). In this case, the coupling of the measurement equipment 12 to the network planning unit 16' is achieved by means of the storage medium.

The information which cell was visited by the UE when the connection was lost is provided by the call trace state machine 28 using the CDRs.

The complete expert rule for detecting and counting "Accessilbity/3G Coverage" issues is:

```
 <group operation="AND">
 <group operation="AND">
  <filter columnName="RABAssignmentRANAPCause" operation="Equals"
  value="Radio Connection With UE Lost" />
 </group>
 <group operation="AND">
  <filter columnName="RSCP" operation="LessThanOrEqualsTo" value="-100"
  extendedCondition="IsOutdoorCell" />
 </group>
 </group>
```

The difference to other possible root causes is quickly visible when looking at the rule that allows to detect whether the radio connection with UE was lost due to 3G Interference:

```
 <group operation="AND">
 <group operation="AND">
  <filter columnName="RABAssignmentRANAPCause" operation="Equals"
  value="Radio Connection With UE Lost" />
 </group>
 <group operation="AND">
  <filter columnName="RSCP" operation="GreaterThanOrEquaIsTo" value="-
  90" extendedCondition="IsOutdoorCell" />
  <filter columnName="Last_Cpich_Ec_NO" operation"LessThanOrEqualsTo"
  value="-13" extendedCondition="IsOutdoorCell" />
 </group>
 </group>
```

The root cause "3G Interference" is characterized by the fact that the RSCP is reported at -90 dBm or better while Ec/N0 (another radio quality parameter reported by the UE) is worse than -13 dB. So different radio conditions for the same RAB Failure Cause reveal the different root causes of problems and the radio quality measurements that need to be checked as well as the individual threshold of these radio quality measurements, this is the expert knowledge programmed in the rules.

The error message "radio connection with UE lost" is not the only RAB Failure Cause value signalled in the network 10, when coverage and interference issues occur. Therefore, other RAB Failure Causes need to be checked as shown below. Here the causes "Failure in the Radio Interface Procedure" and "Release due to UTRAN Generated Reason" (UTRAN - UMTS terrestrial radio access network) have been added to the expert rule:

```
 <group operation="AND">
 <group operation="AND">
  <filter columnName="RABAssignmentRANAPCause" operation="Equals"
  value="Radio Connection With UE Lost" extendedCondition="None" />
  <filter columnName="RABAssignmentRANAPCause" operation="Equals"
  value="Failure in the Radio Interface Procedure" extendedCondition="None" />
  <filter columnName="RABAssignmentRANAPCause" operation="Equals"
  value="Release due to UTRAN Generated Reason" extendedCondition="None"
  />
 </group>
 <group operation="AND">
  <filter columnName="RSCP" operation="GreaterThanOrEqualsTo" value="-
  90" extendedCondition="IsOutdoorCell" />
   <filter columnName="Last_Cpich_Ec_N0" operation="LessThanOrEqualsTo"
   value="-13" extendedCondition="IsOutdoorCell" />
 </group>
 </group>
```

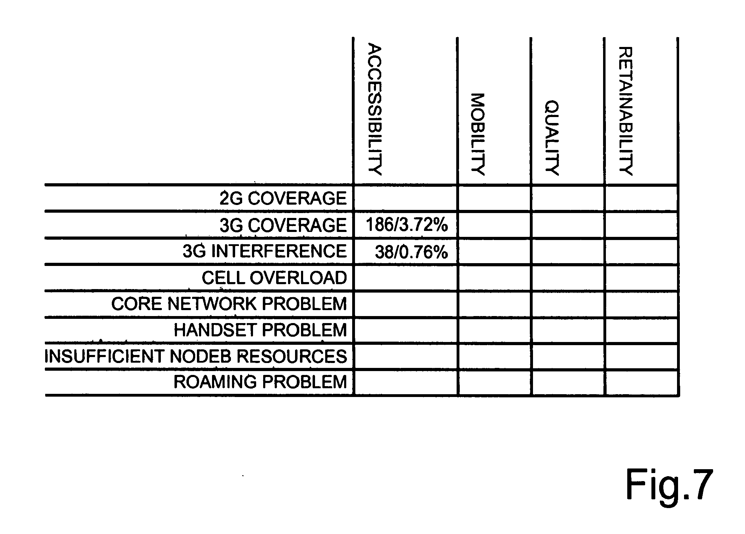

An example of the result of the expert analysis is shown in Fig. 7. In each field two different numbers are shown: the absolute number of detected root causes of a certain type, i.e. the counter readings for the respective group of rules, in first position and the percentage of these detected failures compared to the total number of analyzed calls.

In the example of Fig. 7, a total number of 5000 calls in the particular cell 22' of the network 10 was analyzed and among these 5000 calls 186 with 3G coverage problems that impacted network accessibility of subscribers have been detected versus 38 calls with interference problems.

This gives a failure ratio of 3.72% for 3G coverage problems compared to 0.76% failure ratio for interference problems.

With these numbers it now becomes clearly evident even for the non-expert user of the measurement equipment 12 that the analyzed cell 22' need to be optimized to provide better coverage for subscribers.

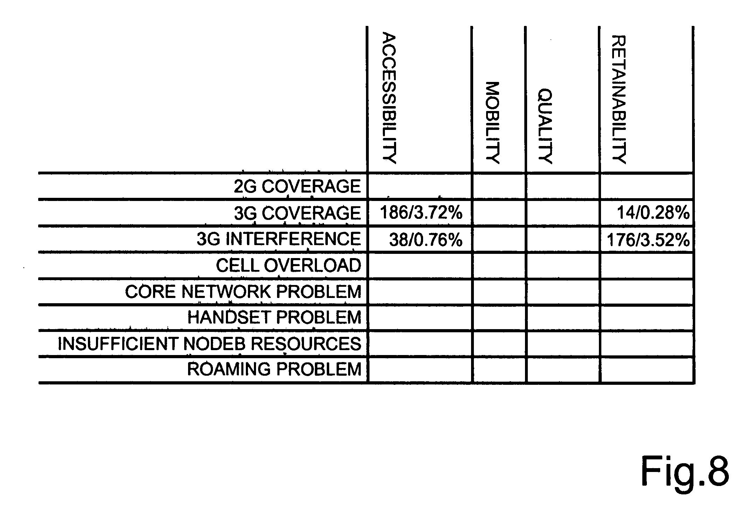

As is shown in Fig. 8, after analyzing thousands of calls the analysis may end up in quite similar numbers for different root causes for "3G Coverage/Accessiblity" and "3G Interference/Retainability" problems.

To optimize a cell for best coverage or lowest interference, completely different workflows are necessary and there is a risk that optimization for best coverage may in turn cause more interference problems. So the question for the unexperienced user is: what has higher priority?

The answer to this question is given by looking at the subscriber impact.

In case of accessibility failure the subscriber tried to setup a call, but call establishment failed. As a result the subscriber must redial and in most cases this second try will lead to successful call establishment.

In case of retainability failure the call was already established and the subscriber is talking to someone when the connection is suddenly interrupted and dropped. This is by far a worse user experience compared to an accessibility failure.

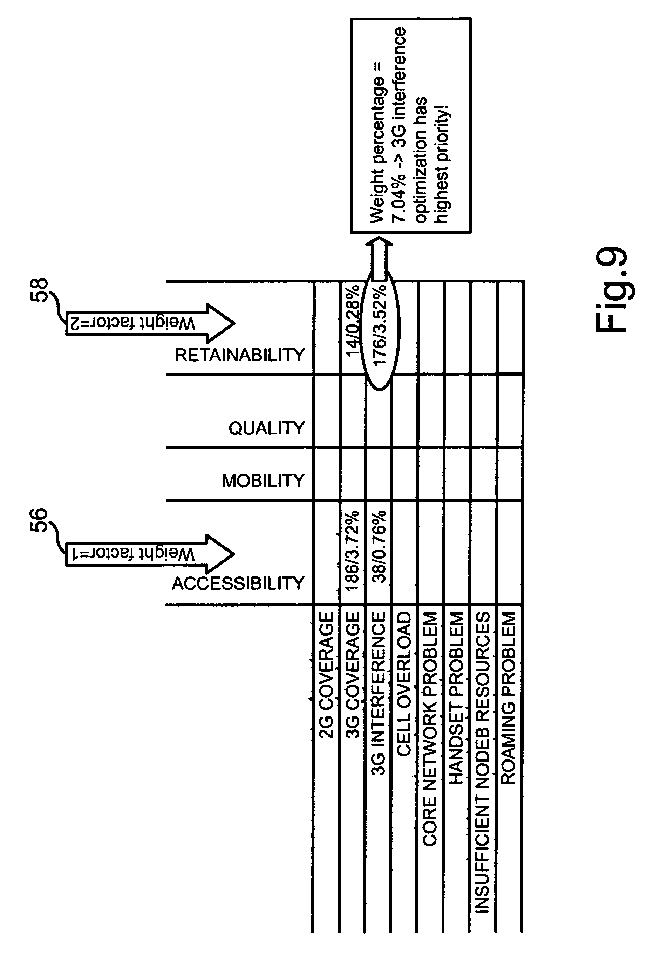

Now, as shown in Fig. 9, a weight factor 56, 58 corresponding to the user experience is introduces for each column of the table. Accessibility failures are weighted with factor = 1, while retainabiltiy failures are weighted with factor = 2. Due to the weight factor = 2 a weighted percentage of 7.04% (doubled 3G interference/Retainability failure ratio) is calculated and this gives now clear indication to the operator of the measurement equipment 12 which optimization target shall be handled with higher priority. In the sample case shown in figure 9, the primary optimization target is now to reduce the 3G Interference in the monitored area, that is cell 22'. After that the secondary optimization target is to improve the coverage.

In a third embodiment of the present invention, the operator of the measurement equipment according to the invention is provided technical advice in the form of text messages. The text messages are stored in a memory like the memory 36. The messages are selected and display in dependency on the results of the analysis of the calls.

It is also possible to start a further analysis step. For instance, in the case of high values in the category 3G coverage/retainabitity for a certain cell, the strength of the signal level could be statistically analyzed in dependency on the range of the cell. If an excessive range is determined, on the basis of the value of the determined excessive range a concrete recommendation may be given to lower the tilt of the cell antenna by e.g. 2 degrees and thus remove the excessive range as cause for the 3G coverage/retainability problem identified in the first analysis cycle by enhanced focussing of the footprint of the antenna. In the case of the network 10, the range of the antenna 22 is limited such that the area A in the cell 22' is not covered sufficiently well. Consequently, the measurement equipment displays a text message containing the advice to readjust the antenna 22.

The examples show how a measurement equipment according to the present invention allows for a systematic identification of error causes, a weighting of error statistics and a drafting of prioritized possible solutions without requiring the operator of the measuring equipment to have specialist knowledge.

Thus, it differs from state of the art devices that only allow for an automatic single call analysis based on the protocol information from the call trace, which enables the detection of errors in the network by means of proprietary state machines or simple algorithms for calculating error rates in data streams (e.g. proprietary KPI - key performance index).

The inventive system is freely programmable and allows of a multistage analysis by depositing the results of the first evaluation in a "decision matrix", which, in a second step, can also be submitted to a further rule-based analysis to arrive at a conclusion regarding e.g. the prioritization of necessary steps for a network optimization.

The system can be used with all current radio access technologies of mobile communications networks, e.g. GSM, UMTS FDD, TD-SCDMA, LTE, WLAN and WiMax.

## Claims

1. Method for operating a device that identifies at least one technical root cause of such errors that occur in a mobile telecommunications network;
the method comprising the following steps:
a) receiving by the device, transmission parameter values (S312), where
- the transmission parameter values are extracted from call data and/or from network planning data by at least one analysis unit;
b) storing in the device a list (38, 50) of technical root causes, the list (38, 50) of technical root causes comprising at least one list item (40) representing one technical root cause;
c) storing in the device at least one group (44, 52) of rules (42), where
- each group (44, 52) of rules (42) comprises at least one rule (42) for identifying a root cause; and where
- each group (44, 52) of rules (42) is assigned to one respective list item (40) of the list (38, 50) of technical root causes;
the method being **characterised in that**:
- the call data for extracting the transmission parameter values are those of a plurality of calls;
- the device additionally receives error messages that are generated by at least one network element comprised in the network, wherein
• the error messages result from the plurality of calls, and wherein
• each error message is generated upon the occurrence of an error during one out of the plurality of calls, and wherein
• each error message indicates one out of a plurality of pre-defined error types;
- each rule (42) is for evaluating an error message generated by the at least one network element;
- each rule (42) comprises one condition for the error type indicated by the evaluated error message and at least one further condition regarding at least one of the received transmission parameter values and/or at least one further condition regarding a further received error message;
- the method further comprises the following steps:
d) providing in the device a counter (46) for each group of rules;
e) for at least one received error message,
e1) verifying (S318) for at least one rule (42), whether the conditions given by that rule are fulfilled, and if so,
e2) incrementing (S320) the counter (46) for the group (44, 52) of rules (42) that the rule (42) belongs to;
f) for the plurality of calls, determining (S330) the counter reading of each counter (46).

2. Method according to claim 1, where
step c) further comprises:
storing in the device a list (54) of error categories, the list (54) comprising at least one list item that represents one error category;
and where each group (52) of rules is additionally assigned to one respective list item of the list (54) of error categories, such that each group (52) of rules is assigned to one technical root cause represented in the list (50) of root causes and to one error category represented in the list (54) of error categories.

3. Method according to claim 1 or claim 2, further comprising the steps of:
receiving, from a user, input data for defining at least one list item for the list of technical root causes and/or at least one rule for evaluating an error message and/or at least one list item for the list of error categories.

4. Method according to claim 2 or 3, comprising the step of providing means for weighting (56, 58) the counter reading of at least one group of rules in dependency on the error category that the at least one group of rules is assigned to.

5. Method according any of the preceding claims, further comprising the step of:
providing, in the device, means (30) for selecting calls in the network according to at least one predetermined criterion and means for receiving only error messages resulting from the selected calls, such that the selected calls are processed as the plurality of calls.

6. Method according claim 5, further comprising the step of receiving user input data for predetermining the at least one criterion for selecting.

7. Method according to any of the preceding claims, where at least one out of the at least one list item (40) of the list (38, 50) of root causes is out of the following group: Coverage, Interference, Cell Overload, Core Network Problem, Handset Problem, Insufficient NodeB Resources, Roaming Problem.

8. Method according to any of the claims 2 to 7, where at least one out of the at least one list item of the list (54) of error categories is out of the following group:
Accessibility, Mobility, Quality, Retainability.

9. Method according to any of the preceding claims, further comprising the steps of:
- storing in the device at least one, preferably human-readable, message regarding an advice comprising instructions of how to eliminate a specific technical root cause;
- providing means (34) for selecting and displaying one out of the at least one message in dependency on the counter reading of at least one group of rules and in dependency on at least one received transmission parameter value and/or at least one received error message.

10. Device for identifying at least one technical root cause of such errors that occur in a mobile telecommunications network, the device comprising:
- first means (33) for receiving transmission parameter values from at least one analysis unit (28, 16') that extracts the transmission parameter values from call data and/or from network planning data;
- a first list storage (36) designed to store at least one list item (40) in a list (38, 50) of root causes, where each list item (40) represents one technical root cause;
- a rules storage (36) designed to store at least one group (44, 52) of rules (42), where each group (44, 52) of rules (42) is assigned to one respective list item (40) of the list (38, 50) of technical root causes;
the device being **characterised in that**
- the device comprises second means (33) for receiving error messages from at least one network element (18, 20, UE) and/or from at least one analysis unit (16', 28), where each error message indicates one out of a plurality of pre-defined error types;
- each group (44, 52) of rules (42) comprises at least one rule (42) for evaluating an error message generated by the at least one network element (18, 20, UE), wherein each rule (42) comprises one condition for the error type indicated by the evaluated error message and at least one further condition regarding at least one of the transmission parameter values and/or at least one further condition regarding a further error message;
- the device comprises one counter (46) for each group (44, 52) of rules (42);
- the device is operable
- to receive (S312) error messages resulting from errors occurring during a plurality of calls as well as transmission parameter values;
- to verify (S318) for at least one received error message and for at least one rule (42), whether the conditions given by that rule (42) are fulfilled, and if so, to increment the counter (46) for the group (44, 52) of rules (42) that the rule (42) belongs to, and
- to determine (S330) the counter reading of each counter (46) for the plurality of calls.

11. Device according to claim 10, further comprising
- a second list storage (36) designed to store at least one list item in a list (54) of error categories, where each list item represents one error category and where each group (52) of rules is additionally assigned to one respective list item of the list (54) of error categories; such that each group (52) of rules is assigned to one list item of the list (50) of technical root causes and to one list item of the list (54) of error categories.

12. Device according to claim 10 or 11, further comprising
editing means (34) for enabling a user
- to edit the list of root causes and/or
- to add a rule for evaluating an error message to the rules storage and/or
- to edit the list of error categories.

13. Device according to any of claims 10 to 12, further comprising
- means for calculating (56, 58) a weighted counter reading from a counter reading of at least one counter, wherein the weighted counter reading is a function of the error category that the at least one group is assigned to which the counter is provided for.

14. Device according to any of claims 10 to 13, further comprising
- means (30) for selecting calls from the network according to at least one pre-determined criterion, where the second means (30, 33) for receiving are designed to exclusively receive error messages resulting from the selected calls, such that the selected calls are processed as the plurality of calls.

15. Device according to claim 14, further comprising means for receiving user input data for pre-determining the at least one criterion for selecting.

## Patentansprüche

1. Verfahren zum Betreiben einer Vorrichtung, die mindestens eine technische Grundursache solcher Fehler identifiziert, die in einem Mobiltelekommunikationsnetzwerk auftreten;
wobei das Verfahren die folgenden Schritte umfasst:
a) Empfangen von Übertragungsparameterwerten (S312) durch die Vorrichtung, wobei
- die Übertragungsparameterwerte von Anrufdaten und/oder von Netzwerkplanungsdaten durch mindestens eine Analyseeinheit gewonnen werden;
b) Speichern einer Liste (38, 50) von technischen Grundursachen in der Vorrichtung, wobei die Liste (38, 50) von technischen Grundursachen mindestens ein Listenelement (40) umfasst, das eine technische Grundursache darstellt;
c) Speichern mindestens einer Gruppe (44, 52) von Regeln (42) in der Vorrichtung, wobei
- jede Gruppe (44, 52) von Regeln (42) mindestens eine Regel (42) zum Identifizieren einer Grundursache umfasst; und wobei
- jede Gruppe (44, 52) von Regeln (42) einem jeweiligen Listenelement (40) der Liste (38, 50) von technischen Grundursachen zugewiesen wird;
wobei das Verfahren **dadurch gekennzeichnet ist, dass**:
- die Anrufdaten zum Gewinnen der Übertragungsparameterwerte jene einer Vielzahl von Anrufen sind;
- die Vorrichtung außerdem Fehlermeldungen empfängt, die durch mindestens ein Netzwerkelement erzeugt werden, das im Netzwerk enthalten ist, wobei
• die Fehlermeldungen sich aus der Vielzahl von Anrufen ergeben, und wobei
• jede Fehlermeldung beim Auftreten eines Fehlers während eines der Vielzahl von Anrufen erzeugt wird, und wobei
• jede Fehlermeldung einen von einer Vielzahl von vordefinierten Fehlertypen angibt;
- jede Regel (42) zum Auswerten einer durch das mindestens eine Netzwerkelement erzeugten Fehlermeldung dient,
- jede Regel (42) eine Bedingung für den durch die ausgewertete Fehlermeldung angegebenen Fehlertyp und mindestens eine weitere Bedingung hinsichtlich mindestens eines der empfangenen Übertragungsparametwerte und/oder mindestens eine weitere Bedingung hinsichtlich einer weiteren empfangenen Fehlermeldung umfasst;
- wobei das Verfahren ferner die folgenden Schritte umfasst:
d) Vorsehen eines Zählers (46) für jede Gruppe von Regeln in der Vorrichtung;
e) für mindestens eine empfangene Fehlermeldung
e1) für mindestens eine Regel (42) Überprüfen (S318), ob die durch diese Regel gegebenen Bedingungen erfüllt sind, und wenn ja,
e2) Inkrementieren (S320) des Zählers (46) für die Gruppe (44, 52) von Regeln (42), zu der die Regel (42) gehört;
f) für die Vielzahl von Anrufen Bestimmen (S330) des Zählerstandes jedes Zählers (46).

2. Verfahren nach Anspruch 1, wobei
Schritt c) ferner umfasst:
Speichern einer Liste (54) von Fehlerkategorien in der Vorrichtung, wobei die Liste (54) mindestens ein Listenelement umfasst, das eine Fehlerkategorie darstellt;
und wobei jede Gruppe (52) von Regeln außerdem einem jeweiligen Listenelement der Liste (54) von Fehlerkategorien zugewiesen wird, so dass jede Gruppe (52) von Regeln einer technischen Grundursache, die in der Liste (50) von Grundursachen dargestellt ist, und einer Fehlerkategorie, die in der Liste (54) von Fehlerkategorien dargestellt ist, zugewiesen wird.

3. Verfahren nach Anspruch 1 oder Anspruch 2, das ferner die Schritte umfasst:
Empfangen von Eingangsdaten von einem Benutzer zum Definieren mindestens eines Listenelements für die Liste von technischen Grundursachen und/oder mindestens einer Regel zum Auswerten einer Fehlermeldung und/oder mindestens eines Listenelements für die Liste von Fehlerkategorien.

4. Verfahren nach Anspruch 2 oder 3 mit dem Schritt des Vorsehens einer Einrichtung zum Gewichten (56, 58) des Zählerstandes von mindestens einer Gruppe von Regeln in Abhängigkeit von der Fehlerkategorie, der die mindestens eine Gruppe von Regeln zugewiesen ist.

5. Verfahren nach einem der vorangehenden Ansprüche, das ferner den Schritt umfasst: Vorsehen einer Einrichtung (30) zum Auswählen von Anrufen in dem Netzwerk gemäß mindestens einem vorbestimmten Kriterium und einer Einrichtung zum Empfangen von nur Fehlermeldungen, die sich aus den ausgewählten Anrufen ergeben, so dass die ausgewählten Anrufe als Vielzahl von Anrufen verarbeitet werden, in der Vorrichtung.

6. Verfahren nach Anspruch 5, das ferner den Schritt des Empfangens von Benutzereingabedaten zu Vorbestimmen des mindestens einen Kriteriums zum Auswählen umfasst.

7. Verfahren nach einem der vorangehenden Ansprüche, wobei mindestens eines von dem mindestens eine Listenelement (40) der Liste (38, 50) von Grundursachen aus der folgenden Gruppe stammt: Abdeckung, Interferenz, Zellenüberlastung, Kernnetzwerkproblem, Handgerätproblem, unzureichende NodeB-Ressourcen, Roaming-Problem.

8. Verfahren nach einem der Ansprüche 2 bis 7, wobei mindestens eines von dem mindestens einen Listenelement der Liste (54) von Fehlerkategorien aus der folgenden Gruppe stammt: Erreichbarkeit, Mobilität, Qualität, Bestandswahrscheinlichkeit.

9. Verfahren nach einem der vorangehenden Ansprüche, das ferner die Schritte umfasst:
- Speichern mindestens einer, vorzugsweise für den Menschen lesbaren, Nachricht hinsichtlich eines Hinweises mit Anweisungen, wie eine spezifische technische Grundursache zu beseitigen ist, in der Vorrichtung;
- Vorsehen einer Einrichtung (34) zum Auswählen und Anzeigen von einer von der mindestens einen Meldung in Abhängigkeit von dem Zählerstand von mindestens einer Gruppe von Regeln und in Abhängigkeit von mindestens einem empfangenen Übertragungsparameterwert und/oder mindestens einer empfangenen Fehlermeldung.

10. Vorrichtung zum Identifizieren mindestens einer technischen Grundursache solcher Fehler, die in einem Mobiltelekommunikationsnetzwerk auftreten, wobei die Vorrichtung umfasst:
- eine erste Einrichtung (33) zum Empfangen von Übertragungsparameterwerten von mindestens einer Analyseeinheit (28, 16'), die die Übertragungsparameterwerte von Anrufdaten und/oder von Netzwerkplanungsdaten gewinnt;
- einen ersten Listenspeicher (36), der dazu ausgelegt ist, mindestens ein Listenelement (40) in einer Liste (38, 50) von Grundursachen zu speichern, wobei jedes Listenelement (40) eine technische Grundursache darstellt;
- einen Regelspeicher (36), der dazu ausgelegt ist, mindestens eine Gruppe (44, 52) von Regeln (42) zu speichern, wobei jede Gruppe (44, 52) von Regeln (42) einem jeweiligen Listenelement (40) der Liste (38, 50) von technischen Grundursachen zugewiesen ist;
wobei die Vorrichtung **dadurch gekennzeichnet ist, dass**
- die Vorrichtung eine zweite Einrichtung (33) zum Empfangen von Fehlermeldungen von mindestens einem Netzwerkelement (18, 20, UE) und/oder von mindestens einer Analyseeinheit (16', 28) umfasst, wobei jede Fehlermeldung einen von einer Vielzahl von vordefinierten Fehlertypen angibt;
- jede Gruppe (44, 52) von Regeln (42) mindestens eine Regel (42) zum Auswerten einer durch das mindestens eine Netzwerkelement (18, 20, UE) erzeugten Fehlermeldung umfasst, wobei jede Regel (42) eine Bedingung für den durch die ausgewertete Fehlermeldung angegebenen Fehlertyp und mindestens eine weitere Bedingung hinsichtlich mindestens eines der Übertragungsparameterwerte und/oder mindestens eine weitere Bedingung hinsichtlich einer weiteren Fehlermeldung umfasst;
- die Vorrichtung einen Zähler (46) für jede Gruppe (44, 52) von Regeln (42) umfasst;
- die Vorrichtung betriebsfähig ist,
- um Fehlermeldungen, die sich aus Fehlern ergeben, die während einer Vielzahl von Anrufen auftreten, sowie Übertragungsparameterwerte zu empfangen (S312);
- für mindestens eine empfangene Fehlermeldung und für mindestens eine Regel (42) zu überprüfen (S318), ob die durch diese Regel (42) gegebenen Bedingungen erfüllt sind, und wenn ja, den Zähler (46) für die Gruppe (44, 52) von Regeln (42), zu der die Regel (42) gehört, zu inkrementieren, und
- den Zählerstand jedes Zählers (46) für die Vielzahl von Anrufen zu bestimmen (S330).

11. Vorrichtung nach Anspruch 10, die ferner umfasst:
- einen zweiten Listenspeicher (36), der dazu ausgelegt ist, mindestens ein Listenelement in einer Liste (54) von Fehlerkategorien zu speichern, wobei jedes Listenelement eine Fehlerkategorie darstellt und wobei jede Gruppe (52) von Regeln außerdem einem jeweiligen Listenelement der Liste (54) von Fehlerkategorien zugewiesen ist; so dass jede Gruppe (52) von Regeln einem Listenelement der Liste (50) von technischen Grundursachen und einem Listenelement der Liste (54) von Fehlerkategorien zugewiesen ist.

12. Vorrichtung nach Anspruch 10 oder 11, die ferner umfasst
eine Überarbeitungseinrichtung (34) zum Ermöglichen, dass ein Benutzer
- die Liste von Grundursachen überarbeitet und/oder
- eine Regel zum Auswerten einer Fehlermeldung zum Regelspeicher hinzufügt, und/oder
- die Liste von Fehlerkategorien überarbeitet.

13. Vorrichtung nach einem der Ansprüche 10 bis 12, die ferner umfasst
- eine Einrichtung zum Berechnen (56, 58) eines gewichteten Zählerstandes von einem Zählerstand mindestens eines Zählers, wobei der gewichtete Zählerstand eine Funktion der Fehlerkategorie ist, der die mindestens eine Gruppe zugewiesen ist, für die der Zähler vorgesehen ist.

14. Vorrichtung nach einem der Ansprüche 10 bis 13, die ferner umfasst
- eine Einrichtung (30) zum Auswählen von Anrufen vom Netzwerk gemäß mindestens einem vorbestimmten Kriterium, wobei die zweiten Einrichtungen (30, 33) zum Empfangen dazu ausgelegt sind, ausschließlich Fehlermeldungen zu empfangen, die sich aus den ausgewählten Anrufen ergeben, so dass die ausgewählten Anrufe als Vielzahl von Anrufen verarbeitet werden.

15. Vorrichtung nach Anspruch 14, die ferner eine Einrichtung zum Empfangen von Benutzereingabedaten zum Vorbestimmen des mindestens einen Kriteriums zum Auswählen umfasst.

## Revendications

1. Procédé d'exploitation d'un dispositif qui identifie au moins une cause profonde technique d'erreurs du type qui se produisent dans un réseau de télécommunications mobiles, le procédé comprenant les étapes suivantes, consistant à :
a) recevoir, par le dispositif, des valeurs de paramètres de transmission (S312), où
- les valeurs des paramètres de transmission sont extraites de données d'appel et / ou de données de planification de réseau par au moins une unité d'analyse ;
b) stocker, dans le dispositif, une liste (38, 50) de causes profondes techniques, la liste (38, 50) de causes profondes techniques comprenant au moins un poste de liste (40), qui représente une cause profonde technique ;
c) stocker, dans le dispositif, au moins un groupe (44, 52) de règles (42), où
- chaque groupe (44, 52) de règles (42) comprend au moins une règle (42), destinée à identifier une cause profonde et où
- chaque groupe (44, 52) de règles (42) est affecté à un poste de liste (40) respectif de la liste (38, 50) de causes profondes techniques ;
le procédé étant **caractérisé en ce que** :
- les données d'appel, destinées à extraire les valeurs des paramètres de transmission, sont celles d'une pluralité d'appels ;
- le dispositif reçoit, de plus, des messages d'erreur, qui sont générés par au moins un élément du réseau, compris dans le réseau, dans lequel
• les messages d'erreur résultent de la pluralité d'appel et dans lequel
• chaque message d'erreur est généré lors de l'occurrence d'une erreur, durant un appel parmi la pluralité d'appels et dans lequel
• chaque message d'erreur indique une erreur parmi une pluralité de types prédéfinis d'erreurs ;
- chaque règle (42) est prévue pour évaluer un message d'erreur, généré par le au moins un élément du réseau ;
- chaque règle (42) comprend une condition pour le type d'erreur, indiqué par le message évalué d'erreur et au moins une autre condition, en ce qui concerne au moins l'une des valeurs reçues des paramètres de transmission et / ou au moins une autre condition, en ce qui concerne un autre message d'erreur reçu ;
- le procédé comprend, en outre, les étapes suivantes, consistant à :
d) prévoir, dans le dispositif, un compteur (46) pour chaque groupe de règles ;
e) pour, au moins, un message d'erreur reçu,
e1) vérifier (S318), pour au moins une règle (42), si les conditions, prévues par cette règle, sont remplies et, si tel est le cas,
e2) incrémenter (S320) le compteur (46) du groupe (44, 52) de règles (42), auquel appartient la règle (42) ;
f) pour la pluralité d'appels, déterminer (S330) la lecture de comptage de chaque compteur (46).

2. Procédé selon la revendication 1, pour lequel l'étape c) comprend, en outre, l'étape, consistant à :
stocker, dans le dispositif, une liste (54) de catégories d'erreurs, la liste (54) comprenant au moins un poste de liste qui représente une catégorie d'erreur et pour lequel
chaque groupe (52) de règles est affecté, de plus, à un poste respectif de liste de la liste (54) de catégories d'erreurs, de sorte que chaque groupe (52) de règles est affecté à une cause profonde technique, représentée dans la liste (50) de causes profondes et à une catégorie d'erreur, représentée dans la liste (54) de catégories d'erreurs.

3. Procédé selon la revendication 1 ou la revendication 2, comprenant, en outre, les étapes, consistant à :
recevoir, d'un utilisateur, des données d'entrée, destinées à définir au moins un poste de liste de la liste de causes profondes techniques et /ou au moins une règle, destinée à évaluer un message d'erreur et / ou au moins un poste de liste de la liste de catégories d'erreurs.

4. Procédé selon la revendication 2 ou 3, comprenant l'étape, consistant à
prévoir un moyen, destiné à pondérer (56, 58) la lecture de comptage d'au moins un groupe de règles en fonction de la catégorie d'erreur, auquel est affecté le au moins un groupe de règles.

5. Procédé selon l'une quelconque des revendications précédentes, comprenant, en outre, l'étape, consistant à :
prévoir, dans le dispositif, un moyen (30), destiné à sélectionner des appels dans le réseau selon, au moins, un critère prédéterminé et un moyen, destiné à recevoir uniquement des messages d'erreurs qui résultent des appels sélectionnés, de sorte que les appels sélectionnés soient traités comme la pluralité d'appels.

6. Procédé selon la revendication 5, comprenant, en outre, l'étape, consistant à
recevoir des données d'entrée utilisateur, destinées à prédéterminer le au moins un critère de sélection.

7. Procédé selon l'une quelconque des revendications précédentes, pour lequel au moins une cause, parmi le au moins un poste de liste (40) de la liste (38, 50) de causes profondes, fait partie du groupe suivant : couverture, interférence, surcharge de cellule, problème du réseau central, problème de combiné, insuffisance des ressources du noeud B, problème d'itinérance.

8. Procédé selon l'une quelconque des revendications 2 à 7, pour lequel au moins une catégorie d'erreur, parmi le au moins un poste de liste de la liste (54) de catégories d'erreurs, fait partie du groupe suivant : accessibilité, mobilité, qualité, continuabilité.

9. Procédé selon l'une quelconque des revendications précédentes, comprenant, en outre, les étapes, consistant à :
- stocker, dans le dispositif, au moins un message, de préférence lisible par l'utilisateur, en ce qui concerne un conseil, comprenant des instructions sur la manière d'éliminer une cause profonde technique spécifique ;
- prévoir un moyen (34), destiné à sélectionner et à afficher un message, parmi le au moins un message, en fonction de la lecture de comptage d'au moins un groupe de règles et en fonction d'au moins une valeur reçue des paramètres de transmission et / ou d'au moins un message d'erreur reçu.

10. Dispositif, destiné à identifier au moins une cause profonde technique d'erreurs du type qui se produit dans un réseau de télécommunications mobiles, le dispositif comprenant :
- un premier moyen (33), destiné à recevoir des valeurs de paramètres de transmission à partir d'au moins une unité d'analyse (28, 16') qui extrait les valeurs des paramètres de transmission de données d'appel et / ou de données de planification du réseau ;
- le stockage (36) d'une première liste, conçu pour stocker au moins un poste de liste (40) dans une liste (38, 50) de causes profondes, où chaque poste de liste (40) représente une cause profonde technique ;
- un stockage (36) de règles, conçu pour stocker au moins un groupe (44, 52) de règles (42), pour lequel chaque groupe (44, 52) de règles (42) est affecté à un poste de liste (40) respectif de la liste (38, 50) de causes profondes techniques ;
le dispositif étant **caractérisé en ce que** :
- le dispositif comprend un second moyen (33), destiné à recevoir des messages d'erreurs d'au moins un élément du réseau (18, 20, UE) et / ou d'au moins une unité d'analyse (16', 28), pour lequel chaque message d'erreur indique un type d'erreur parmi une pluralité de types prédéfinis d'erreurs ;
- chaque groupe (44, 52) de règles (42) comprend au moins une règle (42), destinée à évaluer un message d'erreur, généré par le au moins un élément du réseau (18, 20, UE), dans lequel chaque règle (42) comprend une condition pour le type d'erreur, indiqué par le message évalué d'erreur et au moins une autre condition, en ce qui concerne au moins une valeur parmi les valeurs des paramètres de transmission et / ou au moins une autre condition, en ce qui concerne un autre message d'erreur ;
- le dispositif comprend un compteur (46) pour chaque groupe (44, 52) de règles (42) ;
- le dispositif peut être exploité
- pour recevoir (S312) des messages d'erreurs, qui résultent d'erreurs qui se produisent durant une pluralité d'appel, de même que des valeurs de paramètres de transmission ;
- pour vérifier (S318), pour au moins un message d'erreur reçu et pour au moins une règle (42), si les conditions, prévues par cette règle (42) sont remplies et, si tel est le cas, pour incrémenter le compteur (46) du groupe (44, 52) de règles (42), auquel appartient la règle (42) et
- pour déterminer (S330) la lecture de comptage de chaque compteur (46) pour la pluralité d'appels.

11. Dispositif selon la revendication 10, comprenant, en outre
- le stockage (36) d'une seconde liste, conçu pour stocker au moins un poste de liste dans une liste (54) de catégories d'erreurs, pour lequel chaque poste de liste représente une catégorie d'erreur et pour lequel chaque groupe (52) de règles est affecté, de plus, à un poste respectif de liste de la liste (54) de catégories d'erreurs, de sorte que chaque groupe (52) de règles est affecté à un poste de liste de la liste (50) de causes profondes techniques et à un poste de liste de la liste (54) de catégories d'erreurs.

12. Dispositif selon la revendication 10 ou 11, comprenant, en outre un moyen d'édition (34), destiné à permettre à un utilisateur
- d'éditer la liste de causes profondes et / ou
- d'ajouter une règle, destinée à évaluer un message d'erreur au stockage de règles et / ou
- d'éditer la liste de catégories d'erreurs.

13. Dispositif selon l'une quelconque des revendications 10 à 12, comprenant, en outre,
- un moyen, destiné à calculer (56, 58) une lecture pondérée de comptage d'une lecture de comptage d'au moins un compteur, dans lequel la lecture pondérée de comptage est une fonction de la catégorie d'erreur, auquel est affecté le au moins un groupe, pour lequel le compteur est prévu.

14. Dispositif selon l'une quelconque des revendications 10 à 13, comprenant, en outre,
- un moyen (30), destiné à sélectionner des appels du réseau selon au moins un critère prédéterminé, pour lequel le second moyen (30, 33), destiné à recevoir, est conçu pour recevoir exclusivement des messages d'erreur qui résultent des appels sélectionnés, de sorte que les appels sélectionnés soient traités comme la pluralité d'appels.

15. Dispositif selon la revendication 14, comprenant, en outre, un moyen, destiné à recevoir des données d'entrée utilisateur, destinées à prédéterminer le au moins un critère de sélection.
